Europäisches Patentamt

European Patent Office

Office européen des brevets

(19)

(11) Veröffentlichungsnummer: **0 146 799**
**A2**

(12) # EUROPÄISCHE PATENTANMELDUNG

(21) Anmeldenummer: **84114346.4**

(22) Anmeldetag: **27.11.84**

(51) Int. Cl.⁴: **B 60 K 5/04**
**B 60 K 5/12**

(30) Priorität: **23.12.83 DE 3346708**

(43) Veröffentlichungstag der Anmeldung:
**03.07.85 Patentblatt 85/27**

(84) Benannte Vertragsstaaten:
**DE FR GB IT SE**

(71) Anmelder: **Adam Opel Aktiengesellschaft**
**Bahnhofsplatz 1 Postfach 1560**
**D-6090 Rüsselsheim(DE)**

(72) Erfinder: **Konrad, Wilhelm, Ing. grad.**
**Diana-Weg 15**
**D-6501 Wörrstadt(DE)**

(72) Erfinder: **Mertens, Theobald, Dipl.-Ing.**
**Max-Planck 30**
**D-6500 Mainz(DE)**

(74) Vertreter: **Elbert, Karl, Dipl.-Ing. et al,**
**Adam Opel AG Bahnhofsplatz 1 Postfach 1560**
**D-6090 Rüsselsheim(DE)**

(54) **Kraftfahrzeug mit quer zur Fahrtrichtung angeordnetem Motor.**

(57) Bei einem Kraftfahrzeug mit einem quer zur Fahrtrichtung angeordnetem Motor ist der Motor (6) mittels Motorhalter (16, 18, 20, 22) unmittelbar an den Seitenholmen (32, 34) des Kraftfahrzeuges befestigt. Zu diesem Zweck weisen die Seitenholme nach unten gerichtete Anschraubflächen auf. Die einzelnen Anschraubflächen (38) haben mehrere Löcher (40, 42, 44, 46), so daß die Dämpfungsblöcke (24, 20, 28, 30), an denen die Motorhalter befestigt sind, in unterschiedlichen Positionnen an den Seitenholmen festgeschraubt werden können.

FIG. 1

EP 0 146 799 A2

**0146799**

22. November 1984
8067 A

Kraftfahrzeug mit quer zur Fahrtrichtung angeordnetem Motor

Die Erfindung bezieht sich auf ein Kraftfahrzeug mit quer zur
Fahrtrichtung angeordnetem Motor, welcher mittels Motorhalter
unter Zwischenschaltung von Dämpfungsblöcken an Seitenholme
des Vorderrahmens der Karosserie durch Schrauben befestigt
ist. Solche Kraftfahrzeuge sind derzeit stark verbreitet und
allgemein bekannt.

Bei den bekannten Kraftfahrzeugen dieser Art werden die mit
dem Motorblock verbundenen Motorhalter unter Zwischenschaltung
der Dämpfungsblöcke an an der Karosserie angeschweißte
Adapter angeschraubt. Die hierzu erforderliche Verschraubung
muß von oben her eingesetzt und festgezogen werden. Das bereitet in der Praxis aus Platzgründen Schwierigkeiten und
schließt eine automatische Montage mit einem Roboter aus.

Die DE-OS 26 27 382 beschreibt auch schon ein Fahrzeug mit in
Fahrtrichtung angeordnetem Motor, der unmittelbar an zwei
Seitenholme befestigt ist. Dadurch spart man die Adapter ein.
Genau wie bei dem zuerst genannten Stand der Technik müssen
die Befestigungsschrauben jedoch von oben her eingesetzt und
angezogen werden, so daß die Montierbarkeit nicht optimal ist.

Der Erfindung liegt die Aufgabe zugrunde, ein Kraftfahrzeug der eingangs genannten Art zu entwickeln, bei dem die Motoraufhängung so gestaltet ist, daß eine automatische Montage erfolgen kann.

Diese Aufgabe wird erfindungsgemäß dadurch gelöst, daß die Seitenholme jeweils eine nach unten weisende Anschraubfläche zum Anschrauben der Dämpfungsblöcke durch von unten her eindrehbare Schrauben aufweisen.

Das erfindungsgemäße Kraftfahrzeug hat aufgrund seiner neuartigen Motoraufhängung gegenüber den vorbekannten Kraftfahrzeugen zahlreiche Vorteile. An erster Stelle ist anzuführen, daß der Motor von unten her mit den Seitenholmen verschraubt werden kann, so daß keine Platzprobleme bei der Montage auftreten und eine automatische Montierbarkeit mit einem Roboter gegeben ist. Da der Motor nicht mehr an an der Karosserie angeschweiße Adapter, sondern unmittelbar an die Seitenholme befestigt ist, werden die Kosten für diese Adapter eingespart. Natürlich wird das Kraftfahrzeug insgesamt durch den Fortfall der Adapter auch leichter. Hiervon abgesehen läßt sich eine solche erfindungsgemäße Motoraufhängung durch die unmittelbare Verbindung mit den Seitenholmen im Hinblick auf Innengeräusche und Schwingungsverhalten optimaler abstimmen als die bisher bekannten Konstruktionen.

Eine vorteilhafte Ausgestaltung der Erfindung besteht darin, daß an jeder Anschraubfläche mehrere Löcher zum wahlweisen Anschrauben der Dämpfungsblöcke in verschiedenen Positionen vorgesehen sind. Diese Ausführungsform ist günstig, wenn für einen Fahrzeugtyp verschiedene Motor- und Getriebevarianten vorgesehen sind. Dank ihr wird es möglich, ohne Änderung der Motorhalter verschiedene Motore in Fahrtrichtung versetzt an den Seitenholmen anzuschließen. Es kommt somit zu einer Vereinheitlichung der Bauteile. Außerdem kann die für die jeweilige Motor/Getriebekombination optimale Anschlußstelle gewählt werden.

Bei der im Anspruch 3 angegebenen Ausführungsform der Erfindung werden die fertigungsbedingten Ziehschrägen durch eine entsprechende Gestaltung der Dämpfungsblöcke ausgeglichen, so daß die Anschraubflächen ohne separaten Arbeitsgang und ohne wesentliche Umgestaltung der Preßformen bereits beim Pressen der Karosserieteile mit eingearbeitet werden können.

Wenn in den Seitenholmen koaxial zu den Löchern Schweißmuttern eingesetzt sind, dann wird erreicht, daß die Schweißmuttern in den Seitenholmen vor Korrosion gut geschützt sind, so daß sie nicht zum Festrosten neigen.

Grundsätzlich könnte man für verschiedene Motorvarianten verschiedene Dämpfungsblöcke vorsehen, so daß die Seitenholme an den verschiedenen Anschlußstellen unterschiedlich gestaltet sein können. Vorteilhafter ist es jedoch, wenn die Anschraubflächen zum Anschrauben indentischer Dämpfungsblöcke in verschiedenen Positionen ausgebildet sind, weil man dann eine Vereinheitlichung der Dämpfungsblöcke für verschiedene Fahrzeugvarianten erreicht, so daß sich größere Stückzahlen ergeben und damit eine kostengünstigere Fertigung möglich wird.

Die Erfindung läßt zahlreiche Ausführungsmöglichkeiten zu. Zur Verdeutlichung ihres Grundprinzipes ist eine davon schematisch in der Zeichnung dargestellt und wird nachfolgend beschrieben.
Es zeigen:

Fig. 1    eine schematische Ansicht von oben auf den vorderen die Erfindung betreffenden Teil eines Kraftfahrzeuges,

Fig. 2    eine Ansicht von der Seite auf eine Befestigungsstelle des Motors an einem Seitenholm,

Fig. 3    eine räumliche Ansicht, teilweise in Explosionsdarstellung des Motors eines Kraftfahrzeuges im Bereich seiner Befestigung an einem Seitenholm.

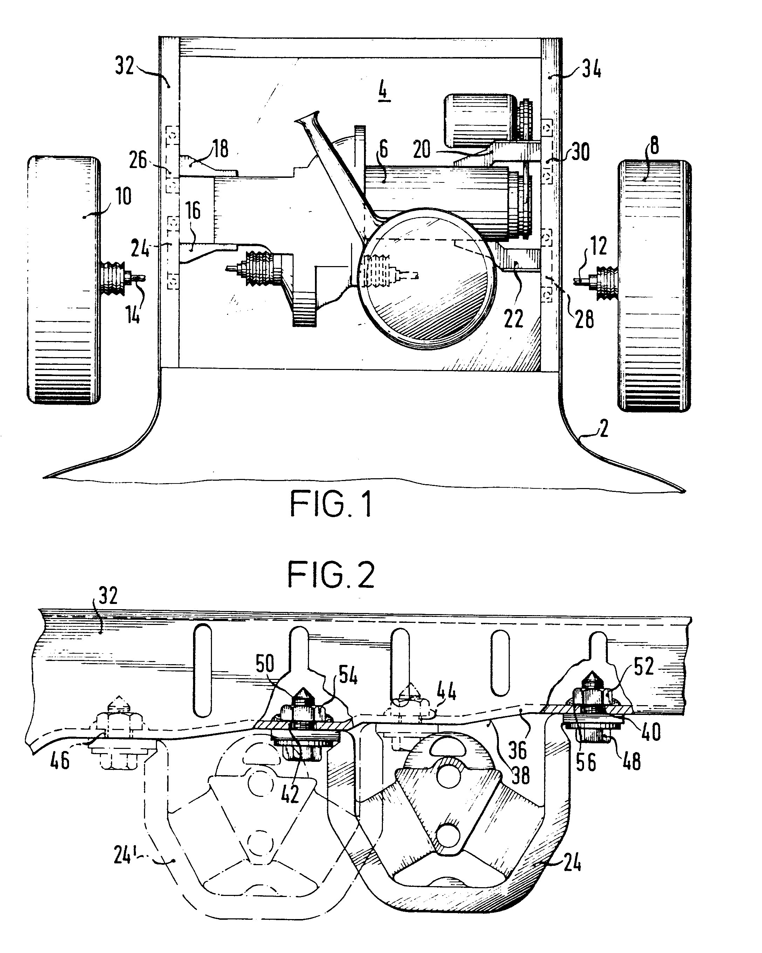

Die Figur 1 zeigt den vorderen Teil einer Kraftfahrzeugkarosserie 2 und insbesondere einen Motorraum 4, in den quer zur Fahrtrichtung ein Motor 6 mit Getriebe befestigt ist. Es handelt sich bei diesem Kraftfahrzeug um einen Frontantriebler, dessen Vorderräder 8, 10 durch Gelenkwellen 12, 14 angetrieben sind.

Am Motor 6 sind insgesamt vier Motorhalter 16, 18, 20, 22 angeschraubt, die ihrerseits unter Zwischenschaltung von vier Dämpfungsblöcken 24, 26, 28, 30 von unten her an Seitenholme 32, 34 der Kraftfahrzeugkarosserie 2 festgeschraubt sind. Der Motor 6 mit dem Getriebe ist also unmittelbar an diesen Seitenholmen 32, 34 festgeschraubt.

Die Figur 2 läßt die Gestaltung der Seitenholme im Bereich der Dämpfungsblöcke und die Gestaltung der Dämpfungsblöcke selbst erkennen. Zunächst ist zu sehen, daß der Seitenholm 32 Ziehschrägen, wie zum Beispiel eine Ziehschräge 36, aufweist. Dadurch entsteht jeweils eine Anschraubfläche 38, die mehrfach abgestuft ist. In dieser Anschraubfläche 38 sind zwei Paare von Löchern 40, 42; 44, 46 vorgesehen. Der Dämpfungsblock 24 ist mittels Schrauben 48, 50 in den Löchern 40, 42 befestigt, wobei als Schraubmuttern Schweißmuttern 52, 54 dienen, die im Inneren des Seitenholmes 32 angeordnet und festgeschweißt sind. Der Dämpfungsblock 24 hat eine abgestufte Anschlußfläche 56, welche die Ziehschrägen 36 ausgleicht. Für die Erfindung wesentlich ist, daß der Dämpfungsblock 24 und die Löcher 40, 42, 44, 46 so ausgebildet sind, daß der Dämpfungsblock 24 auch in der in Figur 2 gestrichelt dargestellten Position, also in der Zeichnung gesehen weiter links am Seitenholm 32, angeschraubt werden kann, wobei die Löcher 46 und 44 zu benutzen sind.

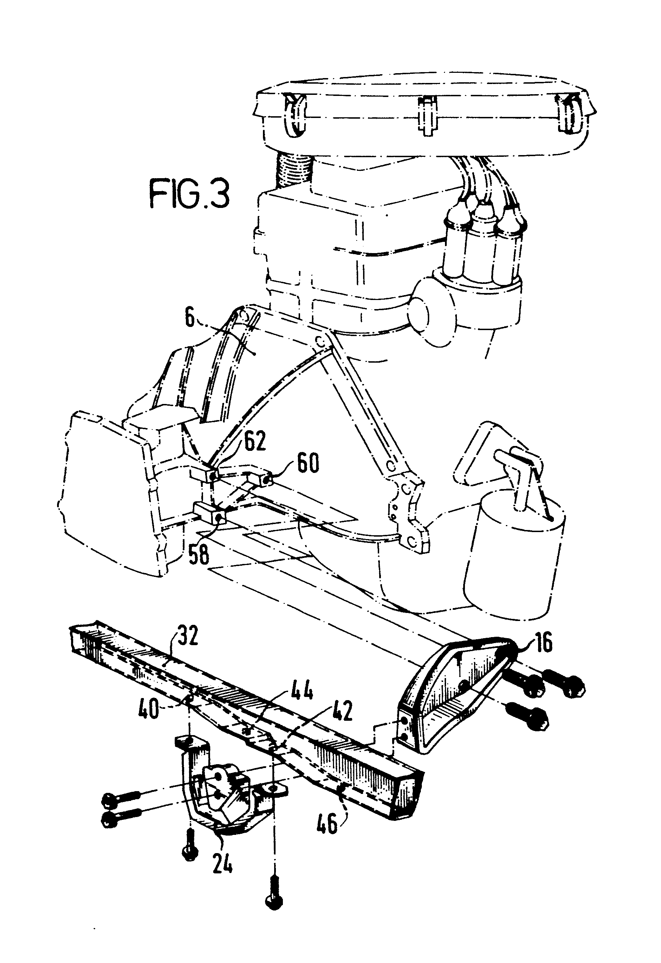

Die Figur 3 zeigt wiederum den Seitenholm 32 mit den Löchern 42, 44, 46, 40 und den Dämpfungsblock 24, der wahlweise mit Schrauben in die Löcher 40, 42 oder 44 und 46 festschraubbar ist. Hinter dem Seitenholm 32 erkennt man den Motorhalter 16, welcher einerseits am Dämpfungsblock 24, andererseits am Motor 6 festschraubbar ist. Zum Befestigen des Motorhalters 16 am Motor dienen bei dieser Ausführungsform drei Gewindebohrungen 58, 60, 62 im Motorblock oder Getriebegehäuse.

Patentansprüche

1.  Kraftfahrzeug mit quer zur Fahrtrichtung angeordnetem Motor, welcher mittels Motorhalter unter Zwischenschaltung von Dämpfungsblöcken an Seitenholme des Vorderrahmens der Karosserie durch Schrauben befestigt ist,
dadurch gekennzeichnet, daß die Seitenholme (32, 34) jeweils eine nach unten weisende, mit Löchern (40, 42, 44, 46) versehene Anschraubfläche (38) zum Anschrauben der Dämpfungsblöcke (24, 26, 28, 30) durch von unten her eindrehbare Schrauben (48, 50) aufweisen.

2.  Kraftfahrzeug nach Anspruch 1,
dadurch gekennzeichnet, daß an jeder Anschraubfläche (38) mehrere Löcher (40, 42, 44, 46) zum wahlweisen Anschrauben der Dämpfungsblöcke (24, 26, 28, 30) in verschiedenen Positionen vorgesehen sind.

3.  Kraftfahrzeug nach Anspruch 1 oder einem der folgenden,
dadurch gekennzeichnet, daß jede Anschraubfläche (38) durch Ziehschrägen (36) mehrfach abgestuft verläuft und die Dämpfungsblöcke (24) jeweils eine entsprechend abgestufte oder abgeschrägte Anschlußfläche (56) aufweisen.

4.  Kraftfahrzeug nach Anspruch 1 oder einem der folgenden,
dadurch gekennzeichnet, daß in den Seitenholmen (32, 34) koaxial zu den Löchern (40, 42, 44, 46) Schweißmuttern (52, 54) eingeschweißt sind.

5.  Kraftfahrzeug nach Anspruch 1 oder einem der folgenden,
dadurch gekennzeichnet, daß die Anschraubflächen (38) zum Anschrauben identischer Dämpfungsblöcke (24, 26, 28, 30) in verschiedenen Positionen ausgebildet sind.

FIG.1

FIG.2

FIG.3

0146799